# EUROPEAN PATENT APPLICATION

(11) **EP 3 825 393 A1**
(43) Date of publication of application: **26.05.2021**
(21) Application number: 20020548.2
(22) Date of filing: 20.11.2020
(51) Int. Cl.: C12G 3/06, C12G 3/005

(54) **MAKING ALCOHOLIC BEVERAGES**

(30) Priority: 20.11.2019 GB 201916877
(71) Applicant: Russel, Kay, Dorchester, Dorset DT2 0NX (GB)
(72) Inventor: Russel, Kay, Dorchester, Dorset DT2 0NX (GB)
(74) Representative: Deans, Michael John Percy

(57) **Abstract**

A pre-formed cocktail concentrate includes alcohol in which the other ingredients of the concentrate are dispersed. The resultant concentrate has a pasty constituency. An alcoholic cocktail is made by dispensing a measure of the concentrate from a supply container therefor into a vessel and mixing with water, and optionally ice.

## Description

This disclosure relates to making beverages, and more particularly to making alcoholic cocktails. In one aspect it relates to a method of making an alcoholic cocktail. In a second and alternative aspect, it relates to preparations for making alcoholic cocktails.

Cocktails are typically made immediately prior to use by adding one or more alcoholic drinks, typically spirits, together with one or more flavourings, which may themselves be liquid, to a cocktail shaker, with or without ice. The shaken mixed liquid is typically then decanted into a glass, to which further additions such as herbs, citrus peel, an olive on a stick or ice may be added.

More recently, dry powder preparations have become available for creating a cocktail by the addition of the appropriate alcoholic drink and, optionally, also water, before the whole is shaken or mixed with a handheld electric whisk. These dry powder products have achieved only a limited success, since, if a supply of the appropriate spirit or spirits and use of a cocktail shaker is still required, the user may as well produce the cocktail in the traditional fashion.

Canned premixed cocktails have also become available. These products produce a drink with a similarity to the genuine cocktail and have achieved some success, for example aboard an aircraft, where it may be impractical to use a cocktail shaker or hand whisk, but seem to lack a freshness that is present in a cocktail mixed immediately before consumption.

Thus, it will be seen that, heretofore, except in the case of canned pre-mixed cocktails, in order to make a cocktail, it has always been necessary for alcohol (and sometimes also water) to be added to other ingredients.

The present disclosure adopts an entirely different approach.

In accordance with the first aspect of this disclosure, a method of making an alcoholic cocktail is provided in which a measure of a pre-formed cocktail concentrate including alcohol in which the other ingredients of the concentrate are dispersed, the resultant concentrate having a pasty constituency, is dispensed from a supply container therefor into a vessel and mixed with water, and optionally ice, to provide the cocktail.

In preferred embodiments, the container is a squeezable tube or bottle, optionally with a non-return valve at its outlet, or a pouch or sachet containing a preset quantity of the concentrate paste.

In the second aspect of this disclosure, there is provided, a pre-formed cocktail concentrate including alcohol in which the other ingredients of the concentrate are dispersed, the concentrate having a pasty constituency and being adapted to form an alcoholic cocktail by mixing a portion thereof with water.

The strength of the cocktail, both in taste and in alcohol, may be adjusted by varying the proportion of added water to concentrate.

According to one embodiment the concentrate is filled into a squeezable tube from which it may be dispensed like toothpaste. In a second embodiment, the concentrate is filled into a squeezable bottle having an outlet provided with a non-return valve therein, preferably a slit valve formed in a membrane extending across the outlet. According to a third embodiment, the concentrate is filled into plastics pouches or sachets.

Reference may now be made, by way of example only, to the Examples set out below, and to the accompanying drawings, in which:
Fig. 1 shows a squeezable tube of pre-formed cocktail concentrate;
Fig. 2 is a sectional view through a squeezable bottle of pre-formed cocktail concentrate; and
Fig. 3 shows a string of sealed plastics pouches each containing around 25ml of pre-formed cocktail concentrate.

### Example 1

The following ingredients were added to a bowl and mixed to a form a firm paste using a hand blender for around 10 minutes of beating.

### Ingredients:

125ml vodka
125ml tomato puree
25ml Worcester sauce
1 tablespoon (approx. 15g) garlic chili salt
1 tablespoon (15 ml) chili sauce
½ tablespoon (approx. 8g) celery salt

The resultant paste was passed through a sieve to remove any seeds, and filled into an empty squeezable tube of the kind from which toothpaste is dispensed.

To make a "Bloody Mary" cocktail, about 25ml of paste (about 2cm length when squeezed from a typical toothpaste tube) was squeezed from the tube, and simply mixed by spoon with 125ml water in a glass. Because all the other ingredients are already dispersed in an alcohol/water single phase mixture (alcohol and water from the vodka and additional water from the puree) and the salt dissolved, the cocktail concentrate is readily dispersed in the water in the glass to provide a cocktail that is almost indistinguishable from a freshly prepared and shaken cocktail.

### Example 2

Approximately equal weights of blackcurrants and sugar were mixed with a little water to prevent sticking and cooked in a pan. The pan was stirred continuously with a wooden spoon until a jelly like constituency was achieved as if making a stiff blackcurrant jelly jam. The jelly was then allowed to cool, and subsequently sieved to remove pips and skin, and mixed using a hand blender in equal proportions by volume with vodka to form a firm paste, which was stored in a squeezable plastics bottle.

To make a blackcurrant cordial cocktail, 25ml of paste (about 2cm length) was squeezed from the bottle, and simply mixed with 125ml sparkling water in a glass. Because the flavourings are already dispersed in an alcohol/water single phase mixture (alcohol and water from the vodka and additional water from the jelly), the cocktail concentrate is readily dispersed in the water in the glass to provide a blackcurrant cordial cocktail.

### Example 3

The flesh and zest from two lemons and one lime were mixed with approximately the same weight of sugar with a little water to prevent sticking and cooked in a pan. The pan was stirred continuously with a wooden spoon until a jelly like constituency was achieved as if making a stiff lemon/lime jelly. The jelly was then allowed to cool, and subsequently sieved to remove any membrane, rind, pips and pith, and mixed with a hand blender in equal proportions by volume with vodka to form a firm paste, which was sealed in plastics pouchs, in quantities of about 25ml per pouch.

To make a St Clement's cocktail, a pouch is cut open and the contents squeezed into a glass, and simply mixed with 125ml sparkling water. Because the flavourings are already dispersed in an alcohol/water single phase mixture (alcohol and water from the vodka and additional water from the puree), the cocktail concentrate is readily dispersed in the water in the glass to provide a St Clement's cocktail. The whole may be set off with a twist of citrus fruit peel on a cocktail stick.

The above Examples were the results of our experiments on a trial batch basis. The quantities can simply be scaled up to provide manufacture on an industrial scale. Other pre-formed cocktail concentrates will readily occur to persons skilled in the making of cocktails.

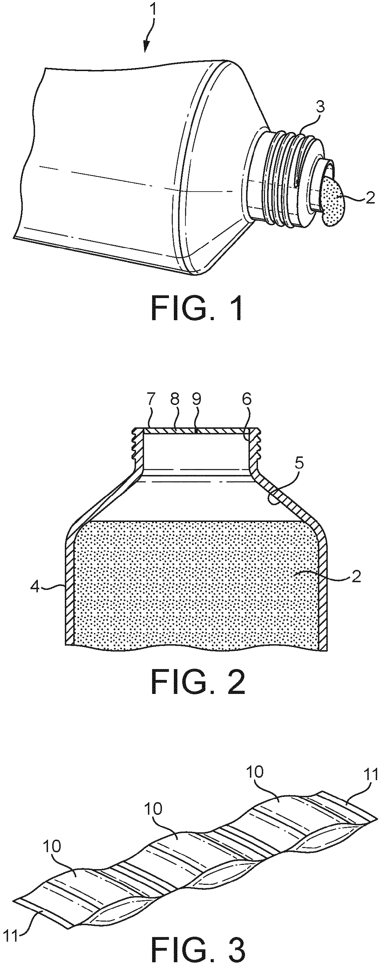

Turning now to the drawings, Figure 1 shows a conventional plastics squeezable tube 1 of the kind typically used for toothpaste (dentifrice) dispensing a pre-formed cocktail concentrate paste 2 though its threaded opening 3 which is closed by a screw-cap (not shown). Tubes that are collapsible when squeezed can also be made from small aluminium blanks by impact extrusion, and a tube head with a threaded opening fitted to one end of the tube. The tube is typically coated internally with a food grade plastics material to prevent reaction with the contents. The pre-formed cocktail concentrate paste may be filled into the open end of the tube, and the end hermetically sealed at a high temperature by folding over several times. Plastics tubes are typically formed from a multilayer plastics material, and laminate tubes are also available commercially. Filling and sealing machines are well known and readily available for the toothpaste, cosmetic and food industries, so that further description is deemed unnecessary.

As an alternative to squeezable tubes, pre-formed cocktail concentrates may be stored in squeezable plastics bottles, such as the exemplary bottle 4 shown in sectional view in Fig. 2. The concentrate paste 2 is filled into interior space 5 of the bottle using conventional filling techniques. Opening 6 from bottle 4 is provided with a non-return valve 7 for the paste in the form of a membrane 8 integrally formed across the opening and provided with a slit 9 therein. Turning the bottle upside down and squeezing forces paste past valve 7 between the sides of the slit 9. Releasing pressure on the bottle 4 allows air to pass in the reverse direction, so that the bottle returns to its original shape and volume, and, when the pressures are balanced, the slit valve 9 closes. Such bottles are well known and used, for example, to dispense tomato ketchup.

A yet further alternative for packaging the pre-formed cocktail concentrate, is illustrated by Fig. 3, which shows a string of individual filled sachets or pouches 11sealed at their ends 12. The technology for forming, filling and sealing such sachets or pouches is conventional, and has long been used to dispense preset quantities of pasty material such as mustard or tomato ketchup. The present pre-formed cocktail concentrate paste is sealed into a string of such pouches 11 using such conventional technology, suitably in an amount of around 25ml per pouch. The sealed pouches may be separated, or supplied as a string of pouches. To dispense the paste a corner of a sachet or pouch must be cut or torn off and the contents squeezed out.

Pre-formed cocktail concentrate manufactured in accordance with the teachings of the present disclosure and packaged in squeezable tubes, squeezable bottles or in individual portions in sachets or pouches are particularly suitable for making cocktails at home, since they avoid the need to keep a supply of different large bottles of alcohol/spirits to make different cocktails, and avoid the need to memorise the formulae for making different cocktails. Similar restricted available space considerations apply on board an aircraft, and a small supply of squeezable tubes, squeezable bottles or squeezable pouches or sachets containing different preformed cocktail concentrate pastes would enable a steward or stewardess to readily provide a passenger with a cocktail selected from a range, since the only major liquid supply required is water.

## Claims

1. A method of making an alcoholic cocktail in which a measure of a pre-formed cocktail concentrate (2) including alcohol in which the other ingredients of the concentrate are dispersed, the resultant concentrate having a pasty constituency, is dispensed from a supply container therefor (1, 4, 10) into a vessel and mixed with water, and optionally ice, to provide the cocktail.

2. A method according to Claim 1, wherein the container is a squeezable tube (1) or bottle (4) having a closable outlet (3, 7), optionally with a non-return valve (8, 9) at said outlet, and the dispensing step comprises squeezing or pouring as much of the concentrate as desired from the container through the outlet.

3. A method according to Claim 1, wherein the container comprises a sealed pouch or sachet (10) containing a preset quantity of the concentrate paste, and the dispensing step comprises cutting or tearing the container and emptying its contents into the vessel.

4. A pre-formed cocktail concentrate including alcohol in which the other ingredients of the concentrate are dispersed, the concentrate having a pasty constituency and being adapted to form an alcoholic cocktail by mixing a portion thereof with water.

5. A concentrate according to Claim 4 filled into a squeezable tube (1) from which it may be dispensed like toothpaste.

6. A concentrate according to Claim 4 filled into a squeezable bottle (4) having an outlet (7) provided with a non-return valve therein, preferably a slit valve (9) formed in a membrane (8) extending across the outlet.

7. A concentrate according to Claim 4 filled into plastics pouches or sachets (10).

8. An alcoholic cocktail comprising a measure of concentrate according to one of Claims 4 to 7, mixed with water, and optionally served with ice.

9. An alcoholic cocktail according to Claim 8, the strength of which, both in taste and in alcohol, has been adjusted by varying the proportion of added water to concentrate.
